# EUROPÄISCHE PATENTANMELDUNG

(11) **EP 0 861 591 A2**
(43) Veröffentlichungstag der Anmeldung: **02.09.1998**
(21) Anmeldenummer: 98103182.6
(22) Anmeldetag: 24.02.1998
(51) Int. Cl.: A01K 63/00

(54) **Gerät zum Entnehmen von Sachen aus mit einer Flüssigkeit gefüllten Behältern, vorzugsweise von in Aquarien gehaltenen Fischen und anderen Aquariumsbewohnern aus dem Aquarium**

(30) Priorität: 26.02.1997 DE 29703441 U
(71) Anmelder: Wissert, Heinz, 79576 Weil am Rhein (DE)
(72) Erfinder: Wissert, Heinz, 79576 Weil am Rhein (DE)
(74) Vertreter: Ebert, Jutta

(57) **Zusammenfassung**

Es wird ein Gerät vorgeschlagen, mit dem sich Sachen aus einem mit einer Flüssigkeit gefüllten Behälter schonend für die betreffende Sache entnehmen lassen. Besonders geeignet ist das Gerät zum Entnehmen von Fischen oder anderen Aquariumsbewohnern aus einem Aquarium, ohne dass diese gestört, in Unruhe versetzt oder gar verletzt werden. Auch die Beschädigung der übrigen Aufbauten eines Aquariums wird vermieden. Das Gerät besteht aus einem Behälter (1) aus vorzugsweise durchsichtigem Material, der einen weiten Zugang (2) und im Abstand dazu eine verschliessbare Öffnung (3) aufweist. Die Öffnung (3) ist vorteilhaft über ein von Hand betätigbares Ventil (6) verschliessbar, das mit einem am Behälter (1) angeformten Saugstutzen (4) beispielsweise durch einen Schlauch (5) verbunden ist. Das Gerät wird in die Flüssigkeit, z.B. Wasser, in der sich die zu entnehmende Sache, z.B. ein Fisch, befindet, bei verschlossener Öffnung (3) eingetaucht und mit seinem Zugang (2) in die Nähe, vorzugsweise über, die Sache gebracht. Wenn dann die Öffnung (3) freigegeben wird, entsteht ein Sog, durch den der Fisch mit einem Anteil Wasser schonend in den Behälter (1) gebracht wird und mit diesem entnommen werden kann.

## Beschreibung

Die Erfindung bezieht sich auf ein Gerät zum Entnehmen von Sachen aus mit einer Flüssigkeit gefüllten Behältern, vorzugsweise von in Aquarien gehaltenen Fischen oder anderen Aquariumsbewohnern aus dem Aquarium.

Für den Aquarienfreund ergibt sich von Zeit zu Zeit die Notwendigkeit, seine Fische oder andere Aquariumsbewohner, z.B. Seepferdchen, aus dem Aquarium zu entnehmen, beispielsweise wenn das Aquarium gesäubert werden oder eine sonstige Art der Aquariumspflege, wie eine Neubepflanzung oder Neu-Arrangierung der übrigen Dekorationsausstattung, vorgenommen werden soll, oder wenn das Aquarium, z.B. für eine Schaustellung, umgesetzt werden soll.

Die zu diesem Zweck bisher angebotenen Hilfsmittel haben die unterschiedlichsten Nachteile.

Bei den dafür im Handel angebotenen Netzkeschern oder Fangnetzen, besteht immer die Gefahr, daß die Tiere mit ihren Kiemen, Flossen, Barteln oder dem Schwanz in den Maschen des Netzes hängen bleiben und dabei sogar verletzt werden. Bestimmte Fischarten, wie z.B. Welse, sind dabei besonders gefährdet. Auch die Bepflanzung des Aquariums wird bei dem Versuch, einen Fisch mit dem Netzkescher einzufangen und zu entnehmen, häufig beschädigt und muß dann oft insgesamt erneuert werden. Das Netz kann auch an anderen Dekorationen, wie Steinaufbauten, Wurzeln und dergl. hängen bleiben und so selbst beschädigt werden. Beim Versuch einen bestimmten Aquariumsbewohner mit dem Netz einzufangen, werden auch alle anderen Tiere in Unruhe versetzt und gejagt. Bis ein bestimmtes Tier mit dem Netz eingefangen ist, müssen oft mehrere Versuche gemacht werden, da die Tiere zu entkommen suchen, wobei die oben angeführten Nachteile immer fortbestehen.

Gelegentlich wird dem Aquarienfreund auch empfohlen, die Fische mit Hilfe einer flachen Schale zu entnehmen. Dies gelingt jedoch häufig nicht oder nur mit viel Geduld, da die Fische, gerade wenn sie sich bedroht fühlen, weiterschwimmen und immer wieder entweichen. Auch wenn eine Schale aus durchsichtigem Material verwendet wird, diese also für die Fische nicht wahrnehmbar ist, so fühlen sich die Tiere doch durch die für sie auf jeden Fall sichtbare, die Schale haltende Hand bedroht.

Im Fachhandel wird auch eine sogenannte Fischfalle angeboten. Dies ist ein Behälter aus vorzugsweise durchsichtigem Material, der seitlich offen ist und mit einer an einer Schnur gehaltenen Falltür verschlossen werden kann. Um die Fische oder einen Fisch anzulocken, soll Fischfutter in den Behälter eingebracht und dieser sodann auf den Boden des Aquariums gestellt werden. Sobald der gewünschte Fisch, von dem Futter angelockt, in den Behälter einschwimmt, kann die Falltür durch loslassen der Schnur geschlossen werden. Auch diese Methode erfordert ein hohes Maß an Geduld; nicht ohne weiteres tun die Fische oder der eine gewünschte Fisch dem wartenden Aquarienfreund den Gefallen, in die Falle einzuschwimmen. Besonders wenn ein bestimmter Fisch entnommen werden soll, weil er z.B. von anderen Aquariumsbewohnern unterdrückt wird oder krank zu sein scheint oder weil er für eine Präsentation umgesetzt werden soll, kann es dauern, bis sich der gewünschte Erfolg einstellt.

Aufgabe der Erfindung ist es, ein Gerät zu schaffen, mit dem sich Fische oder andere Aquariumsbewohner einfach, schnell und gezielt aus einem Aquarium entnehmen lassen, ohne sie dabei in Streß oder Unruhe zu versetzen und besonders ohne die Gefahr, sie zu verletzen oder die Bepflanzung oder andere Ausstattung des Aquariums zu beschädigen oder auch nur an ihr hängenzubleiben.

Dies wird erfindungsgemäß erreicht durch einen Behälter, der einen freien, weiten Zugang und im Abstand dazu eine verschließbare Öffnung aufweist.

Um einen Fisch dem Aquarium zu entnehmen, wird die Öffnung verschlossen oder auch einfach mit dem Finger zugehalten und der Behälter mit dem Zugang, der weit genug sein muß, um einen Fisch in den Behälter einzulassen, voran in das Aquarium eingetaucht und gezielt über den zu entnehmenden Fisch gehalten oder in seine Nähe gebracht. Da die Luft bei geschlossener Öffnung nicht entweichen kann, kann zunächst auch kein Wasser in den Behälter eindringen; es baut sich vielmehr ein leichter Überdruck im Behälter auf. Wenn dann die Öffnung freigegeben wird, erzeugt die plötzlich entweichende Luft einen Sog, der mit dem eindringenden Wasser auch den in der Nähe befindlichen Fisch mitnimmt. Dieser kann nun im Behälter mit einer gewissen Menge Wasser entnommen werden, indem der leicht gekippt und der Zugang bei Bedarf entweder mit der Hand oder mit einer Abdeckplatte zugehalten wird.

Es ist dies für den Fisch und die übrigen Aqariumsbewohner eine sehr schonende Art der Entnahme. Der Fisch bleibt in seinem Element, d.h. es erfolgt keine Trockenentnahme wie etwa mit einem Netzkescher. Es besteht keinerlei Verletzungsgefahr, die Tiere werden nicht in Unruhe versetzt, auch die übrige Dekorationsausstattung des Aquariums wird nicht beschädigt.

Vorzugsweise besteht der Behälter aus transparentem Material, damit er von den Aquariumsbewohnern nicht wahrgenommen werden kann und der zu entnehmende Fisch nicht ausweicht.

Es ist von Vorteil, wenn an der Öffnung des Behälters ein verschließbarer Saugstutzen angeformt ist, der durch ein Ventil verschlossen werden kann.

Nach einer bevorzugten Ausführungsform des erfindungsgemäßen Saug-Keschers ist der Saugstutzen an der dem Zugang entgegengesetzten Seite des Behälters angeformt.

An dem Saugstutzen kann ein Schlauch aus vorzugsweise ebenfalls transparentem Material angeschlossen sein, der an seinem anderen Ende durch ein manuell betätigbares Ventil verschlossen werden kann. Dies gestattet eine bequeme Handhabung des Gerätes. Indem der Behälter in der einen Hand und das Ventil in der anderen Hand gehalten wird, kann der Saug-Kescher ruhig und gezielt in die richtige Position gebracht werden; der Aquarienfreund muß nicht notwendigerweise ins Wasser greifen.

Der Behälter kann eine längliche, flaschenförmige Form ohne Boden aber auch jede andere für den betreffenden Anwendungsfall zweckmäßig erscheinende Form haben.

Die Erfindung wird im folgenden anhand der anhängenden Zeichnung genauer beschrieben.

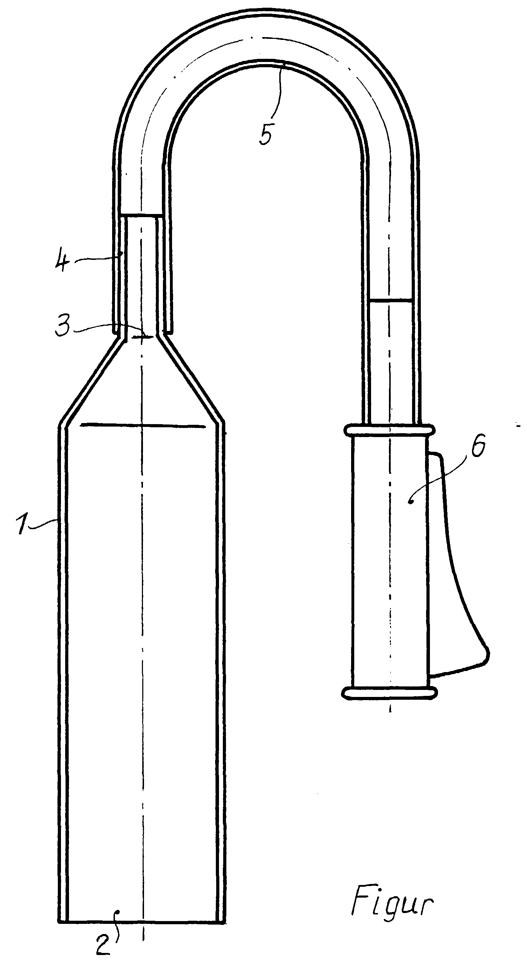

Die einzige Figur zeigt die Ansicht eines erfindungsgemäßen Gerätes, teilweise geschnitten.

Das Gerät besteht aus einem Behälter 1, aus vorzugsweise durchsichtigem Material, der einseitig offen ist und somit einen Zugang 2 für Aquariumsbewohner aufweist. In der Figur dargestellt ist der Behälter 1 in einer länglichen, flaschenartigen Form ohne Boden, er kann aber auch jede andere für den Zweck geeignete Form aufweisen. In genügend großem Abstand zu dem Zugang 2 weist der Behälter 1 außerdem eine verschließbare Öffnung 3 auf. Dies kann im einfachsten Fall ein Loch in der Behälterwand sein, das durch ein entsprechendes Mittel, z.B. eine Klappe oder auch lediglich den Finger des Benutzers verschlossen werden kann. Vorteilhafter ist es jedoch, wenn, wie in der Zeichnung dargestellt, dem Zugang 2 gegenüberliegend am Behälter 1 ein offener Saugstutzen 4 angeformt ist, an dem ein Schlauch 5, der ebenfalls vorzugsweise aus durchsichtigem Material (Kunststoff) besteht, angeschlossen ist und der an seinem anderen Ende mit einem Ventil 6 verbunden ist, das von Hand betätigt werden kann.

Um einen bestimmten Fisch einem Aquarium zu entnehmen, wird der Behälter 1 bei geschlossenem Ventil 6 bzw. verschlossener Öffnung 3 mit seiner den Zugang 2 bildenden, offenen Seite voran in das Aquariumswasser eingetaucht und über den zu entnehmenden Fisch gehalten bzw. in seine Nähe gebracht. Solange das Ventil 6 bzw. die Öffnung 3 geschlossen ist, kann kein Wasser in den Behälter 1 eindringen und hochsteigen, da die darin enthaltene Luft nicht entweichen kann; es entsteht vielmehr ein leichter Überdruck in dem Behälter 1. Sobald sich der Behälter 1 mit seinem Zugang 2 über dem oder in der Nähe des zu fangenden Fisches befindet, wird das Ventil 6 geöffnet bzw. die Öffnung 3 freigegeben. Die unter dem zuvor aufgebauten, leichten Überdruck plötzlich entweichende Luft verursacht einen Sog, durch den mit dem nach dem Gesetz der kommunizierenden Röhren in den Behälter 1 eindringenden und hochsteigenden Wasser auch der in der Nähe befindliche Fisch mitgenommen wird, dieser sich sonach in dem Behälter 1 befindet und mit diesem leicht aus dem Aquarium entnommen werde kann. Dazu wird der Behälter 1 vorzugsweise zunächst leicht gekippt und am Zugang 2, z.B. mit der Hand oder einer Abdeckplatte, zugehalten und dann mit dem darin befindlichen Fisch und einer gewissen Menge Wasser entnommen.

Dies ist eine für den Fisch und die übrigen Aquariumsbewohner besonders schonende Art und Weise der Entnahme, da er in seinem Element, dem Wasser, aus dem Aquarium entnommen werden kann, also kein Trockenfang, wie bei den bekannten Netzkeschern, stattfindet. Es wird somit Streßbildung bei dem zu fangenden Fisch vermieden und auch die übrigen Aquariumsbewohnern werden nicht in Unruhe versetzt, da das Gerät nicht im ganzen Aquarium mehrfach hin und herbewegt werden muß. Eine Verletzung der Tiere beim Einfangen wird mit Sicherheit vermieden und auch die Bepflanzung und sonstige Ausstattung des Aquariums bleiben unbeschädigt. Der Aquarienfreund kann einen bestimmten Fisch ganz gezielt und schnell entnehmen, ohne sich in Geduld fassen zu müssen, bis der "richtige" Fisch, etwa in eine Fischfalle, eingeschwommen ist.

## Patentansprüche

1. Gerät zum Entnehmen von Sachen aus einem mit einer Flüssigkeit gefüllten Behälter, vorzugsweise von in Aquarien gehaltenen Fischen oder anderen Aquariumsbewohnern aus dem Aquarium
**gekennzeichnet durch**
einen Behälter (1), der einen freien, weiten Zugang (2) und im Abstand dazu eine verschließbare Öffnung (3) aufweist.

2. Gerät nach Anspruch 1, dadurch gekennzeichnet, daß der Behälter (1) aus transparentem Material besteht.

3. Gerät nach Anspruch 1 oder 2, dadurch gekennzeichnet, daß an der Öffnung (3) ein verschließbarer Saugstutzen (4) angeformt ist.

4. Gerät nach Anspruch 3, dadurch gekennzeichnet, daß der Saugstutzen (4) durch ein Ventil (6) verschließbar ist.

5. Gerät nach Anspruch 3 oder 4, dadurch gekennzeichnet, daß der die Öffnung (3) umschließende Saugstutzen (4) an der dem Zugang (2) entgegengesetzten Seite des Behälters (1) angeformt ist.

6. Gerät nach einem der Ansprüche 3 bis 5, dadurch gekennzeichnet, daß an dem Saugstutzen (4) ein Schlauch (5) aus vorzugsweise transparentem Material angeschlossen ist, der an seinem anderen Ende durch ein manuell betätigbares Ventil (6) verschließbar ist.

7. Gerät nach einem der vorangehenden Ansprüche, dadurch gekennzeichnet, daß der Behälter (1) eine längliche, flaschenförmige Form ohne Boden aufweist.
